**Europäisches Patentamt**

**European Patent Office**

**Office européen des brevets**

(19)

(11) Numéro de publication: **0 248 738**
**B1**

(12) **FASCICULE DE BREVET EUROPEEN**

(45) Date de publication du fascicule du brevet:
**19.12.90**

(21) Numéro de dépôt: **87401263.6**

(22) Date de dépôt: **04.06.87**

(51) Int. Cl.⁵: **F16C 13/00, B21B 13/14,**
**B21B 31/07, D21G 1/02**

(54) Cylindre à enveloppe tournante.

(30) Priorité: **04.06.86 FR 8608074**

(43) Date de publication de la demande:
**09.12.87 Bulletin 87/50**

(45) Mention de la délivrance du brevet:
**19.12.90 Bulletin 90/51**

(84) Etats contractants désignés:
**AT BE CH DE ES FR GB GR IT LI LU NL SE**

(56) Documents cités:
**EP-A- 0 140 776**
**EP-A- 0 225 827**
**FR-A- 1 324 670**
**FR-A- 2 356 045**
**FR-A- 2 572 313**
**GB-A- 2 060 822**
**GB-A- 2 112 086**
**US-A- 3 304 139**
**US-A- 3 639 956**

**PATENT ABSTRACTS OF JAPAN,**
**vol. 7, no. 193 (M-238)[1338], 24 août 1983; &**
**JP-A-58 93 508 (MITSUBISHI JUKOGYO K.K.) 03-06-1983**

(73) Titulaire: **CLECIM, 107 boulevard de la Mission**
**Marchand, F-92402 Courbevoie Cédex(FR)**

(72) Inventeur: **Boulot, Dominique, 70 Boulevard Jean**
**Jaurès, F-92100 Boulogne(FR)**

(74) Mandataire: **Le Brusque, Maurice et al, Cabinet Harlé et**
**Phélip 21, rue de la Rochefoucauld, F-75009 Paris(FR)**

## Description

L'invention a pour objet un cylindre à enveloppe tournante du type utilisé pour le pressage ou le laminage de produits plats notamment dans l'industrie du papier mais s'applique plus spécialement aux installations de laminage de produits métalliques soumis à des efforts de serrage importants .

Depuis un certain temps, on a proposé d'utiliser, d'abord dans la fabrication du papier puis, récemment, dans les laminoirs, des cylindres à enveloppe tournante comprenant un arbre-support fixe en forme de poutre allongée ,entouré par une enveloppe tubulaire montée rotative sur la poutre autour de paliers définissant un axe de rotation transversal à l'axe de laminage, et prenant appui sur la poutre par l'intermédiaire d'une pluralité de moyens de maintien répartis l'un à côté de l'autre sur la longueur de la poutre et centrés sur un plan axial d'appui qui correspond au plan de transmission de l'effort de serrage lorsque le cylindre fait partie d'un laminoir . En effet, l'enveloppe tubulaire, d'épaisseur relativement mince,est déformable et en agissant sélectivement sur les différents moyens de maintien, on peut donner à la face externe du cylindre , par exemple dans un laminoir de type quarto ou sexto, un profil permettant de compenser le fléchissement de l'arbre et de corriger des défauts de planéité ou d'épaisseur relevés sur le produit en cours de laminage. A cet effet, chaque moyen de maintien de l'enveloppe est constitué par un patin centré sensiblement dans le plan d'appui, interposé entre l'enveloppe et la poutre-support et monté coulissant sur cette dernière suivant une direction radiale s'étendant sensiblement dans le plan de serrage . Chaque patin prend appui d'un côté sur la face interne de l'enveloppe par l'intermédiaire d'une face d'appui cylindrique sensiblement de même rayon et de l'autre sur la poutre-support par l'intermédiaire d'un moyen de poussée réglable, généralement un vérin hydraulique.Il est ainsi possible de régler individuellement la pousssée de chaque patin dans le sens radial de façon à donner à l'enveloppe tubulaire le profil convenable. L'enveloppe tubulaire tourne sur les faces d'appui des patins de maintien et il est nécessaire d'introduire en continu entre la face d'appui du patin et la face interne de l'enveloppe, un fluide hydraulique susceptible de former un film lubrifiant.

Généralement, chaque patin de maintien fonctionne de façon analogue à un palier hydrostatique et est muni à cet effet, sur sa face d'appui, d'au moins une poche hydrostatique constituée d'un évidement s'ouvrant vers l'extérieur et alimentée en fluide lubrifiant de façon à répartir ce dernier dans l'intervalle entre la face d'appui du patin et l'enveloppe.

Généralement, le fluide lubrifiant est prélevé sur celui qui alimente le vérin exerçant l'effort de poussée grâce à un canal de liaison ménagé entre la chambre du vérin et la poche hydrostatique.

Dans une telle disposition, décrite, par exemple par le document GB-A 2 060 822, les vérins de poussée doivent donc être alimentés avec un débit correspondant au débit de fuite dans la poche hydrostatique correspondante. Ce débit est faible tant que la face extérieure du patin reste bien centrée par rapport à la face interne cylindrique de l'enveloppe mais, comme on l'explique dans le document GB-A 2 060 822, l'enveloppe est soumise à des efforts qui peuvent la déformer transversalement de telle sorte qu'elle n'est plus centrée par rapport au patin et il en résulte une consommation plus élevée d'huile. Pour remédier à ce problème, le document GB-A 2 060 822, prévoit d'adjoindre aux vérins de poussée exerçant un effort au centre du patin deux vérins latéraux associés chacun à une poche hydrostatique alimentée de la mê me fason et dans lesquels on peut faire varier la pression de façon à rétablir la concentricité du patin avec l'enveloppe.

On a aussi imaginé, dans la demande de brevet français FR-A 2 572 313 déposée par la même Société, de former le film d'huile entre le patin et l'enveloppe par des moyens totalement indépendants du circuit d'alimentation sous haute pression des vérins de poussée. Dans ce cas, chaque patin de maintien est associé à des moyens d'alimentation et de récupération du fluide lubrifiant placés, respectivement, à l'extrémité amont et à l'extrémité aval, dans le sens de rotation, de l'intervalle entre la face d'appui du patin et la face interne de l'enveloppe, de telle sorte que la portance du patin soit assurée de façon hydrodynamique par circulation du fluide lubrifiant entre les extrémités amont et aval dudit intervalle.

Le document EP-A 0 225 827 publié le 16.7.87 et compris dans l'état de la technicque selon l'Article 54 3), décrit plus particulèrement un circuit d'introcuction et de récupération de l'hulie dans l'intervalle entre la face d'appui de partir et la face interne de l'enveloppe. Deux systèmes de paterne hydrodynamique et hydrostatique, sont utilisés pour maintenir l'enveloppe.

Par ailleurs, pour réduire la pression spécifique d'appui de chaque patin sur l'enveloppe, on avait déjà proposé, par exemple dans le brevet US-A 3 131 625, d'augmenter la surface d'appui du patin sur la face interne de l'enveloppe de façon que celle-ci couvre un secteur angulaire important, supérieur à un quadrant et pouvant aller presque jusqu'à 180°. L'enveloppe prend ainsi appui sur la poutre support par l'intermédiaire de véritables coussins de fluide permettant en outre, de la maintenir centrée sensiblement dans le plan de serrage.

Dans cette disposition prévue pour l'industrie du papier et par conséquent pour des pressions relativement peu élevées, cet effet de centrage de l'enveloppe sur les patins de maintien permet d'éviter l'emploi de paliers de centrage placés aux deux extrémités de l'enveloppe , celle-ci prenant appui sur l'arbre uniquement par l'intermédiaire des patins .

Toutefois, dans le cas des laminoirs utilisés dans la métallurgie et où le cylindre sert à appliquer des efforts de serrage importants sur le produit ou sur un cylindre de travail, l'enveloppe montée flottante sur les patins, a tendance à se déformer et à être entraînée par la rotation du produit ou du cylindre de travail et doit donc être maintenue à ses deux extrémités par des paliers de centrage comprenant une bague externe solidaire de l'enveloppe et une bague interne centrée sur la poutre-support. Cependant, dans le cas d'efforts de laminage importants, ces paliers reprennent une partie de l'effort mis en jeu, ce qui introduit, d'une part une perturbation dans le contrôle de la déformation de l'enveloppe et d'autre part des efforts locaux répartis pour le système.

L'invention a donc pour objet des perfectionnements permettant d'améliorer le fonctionnement des cylindres à enveloppe déformable de ce type en assurant le centrage de l'enveloppe sur les patins dans une position optimale et sans introduire de perturbation même en cas d'efforts appliqués importants.

Conformément à l'invention, chaque patin de maintien est muni, sur la partie de sa face d'appui tournée du côté amont dans le sens de rotation de l'enveloppe d'un moyen auxiliaire d'application contre la face interne de l'enveloppe d'une poussée latérale dirigée suivant une direction radiale inclinée vers l'amont par rapport au plan de serrage, ladite poussée étant suffisante pour entraîner, en service, un léger décalage angulaire du patin susceptible de réaliser, par effet de coin d'mile, le centrage relatif de l'enveloppe par rapport au patin.

L'invention s'applique de façon particulièrement avantageuse aux laminoirs par exemple de type quarto ou sexto dans lesquels un cylindre, généralement un cylindre d'appui est du type que l'on vient de décrire comprenant une enveloppe tubulaire déformable montée rotative autour d'une poutre support portée à ses deux extrémités par deux empoises de support logées dans deux colonnes verticales de la cage du laminoir et sur lesquelles est appliqué l'effort de serrage, l'enveloppe étant maintenue par deux paliers de centrage placées à ses deux extrémités .

Conformément à l'invention, la bague interne de chaque palier de centrage de l'enveloppe prend appui axialement sur l'empoise de support correspondante et est bloquée en rotation par rapport à celle-ci par une clavette placée dans le plan de serrage du côté diamétralement opposé aux patins de maintien , l'enveloppe étant centrée dans le plan de serrage, d'un côté par lesdites clavettes et de l'autre, par l'ensemble des patins de maintien, chaque patin couvrant un secteur angulaire d'au moins un quadrant et comprenant , sur la partie de sa face d'appui tournée du côté amont dans le sens de rotation de l'enveloppe, un moyen auxiliaire de poussée contre la face interne de l'enveloppe dans une direction radiale inclinée vers l'amont par rapport au plan de serrage et sous une pression suffisante pour entraîner en service un léger décalage angulaire du patin susceptible de réaliser , par effet de coin, un centrage relatif de l'enveloppe par rapport au patin.

De façon avantageuse, le moyen de poussée latérale de chaque patin comprend au moins une poche de centrage hydrostatique ménagée sur le côté amont de la face d'appui du patin et s'ouvrant vers la face interne de l'enveloppe et un circuit d'alimentation sous pression de la poche de centrage par un fluide lubrifiant susceptible de constituer au moins une partie du fluide interposé dans l'intervalle entre le patin et l'enveloppe.

Selon différentes formes de réalisation de l'invention, la poche latérale de centrage peut être associée soit à des moyens de mise en circulation du fluide lubrifiant entre le patin et l'enveloppe dans le cas d'un appui hydrodynamique, soit à une poche d'effort sensiblement centrée dans le plan d'appui, dans le cas d'un appui hydrostatique . Dans ce dernier cas, la poche de centrage est alimentée sous une pression moindre que la poche d'effort, la pression dans la poche de centrage pouvant par exemple être comprise entre le tiers et la moitié de la pression dans la poche d'effort.

Lorsque la poche de centrage est associée à une poche d'effort hydrostatique, selon l'une des caractéristiques essentielles de l'invention, le fluide lubrifiant est alimenté dans les deux poches avec un débit de fluide suffisant pour réaliser une circulation dans le sens de rotation de l'enveloppe et par conséquent au centrage de celle-ci par effet de coin à l'extrémité aval du patin qui fonctionne alors de façon hydrostatique avec un effet de centrage hydrodynamique.

Dans le cas où le patin fonctionne de façon hydrodynamique, la poche latérale selon l'invention permet de contrôler l'effet de centrage par coin d'huile à l'extrémité aval du patin.

Dans un laminoir comportant un cylindre à enveloppe déformable selon l'invention, chaque extrémité de la poutre support est enfilée sans jeu dans une douille fixée à l'intérieur de l'empoise de support correspondante et sur laquelle l'extrémité de la poutre support est bloquée en rotation . De plus, la bague interne de chaque palier de centrage est, de préférence, fixée par simple friction sur la douille de l'empoise correspondante par l'intermédiaire d'un anneau de frottement appliqué sur la face frontale de la bague interne au moyen d'une série de poussoirs hydrauliques répartis sur le pourtour de la douille .

De façon particulièrement avantageuse, la bague interne de chaque palier de centrage et l'extrémité correspondante de la poutre support sont bloquées en rotation par une même clavette s'engageant dans des rainures alignées le long du plan de serrage et ménagées respectivement dans la douille , la bague interne et la poutre support . Un jeu suffisant est alors laissé entre la clavette et le fond de la rainure de la bague interne pour permettre le positionnement de l'enveloppe tubulaire par rapport aux empoises à la mise en service avec glissement de la bague interne sur l'anneau de frottement .

Mais l'invention présente également d'autres caractéristiques et d'autres avantages qui seront mieux compris par la description détaillée d'un mode de réalisation particulier donné à titre d'exemple représenté sur les dessins annexés.

Fig.1 est un schéma d'ensemble d'un cylindre à enveloppe tournante muni de moyens de centrage selon l'invention ;

Fig.2 représente à échelle agrandie, en coupe transversale, un patin de maintien muni des dispositions selon l'invention;

Fig.3 est un diagramme des pressions exercées le long du patin selon l'invention.

Fig.4 représente, à échelle agrandie, l'extrémité d'un cylindre de laminoir à enveloppe déformable ;

Fig.5 est une vue en coupe transversale à droite selon la ligne A-A et à gauche selon la ligne B-A de la figure 4.

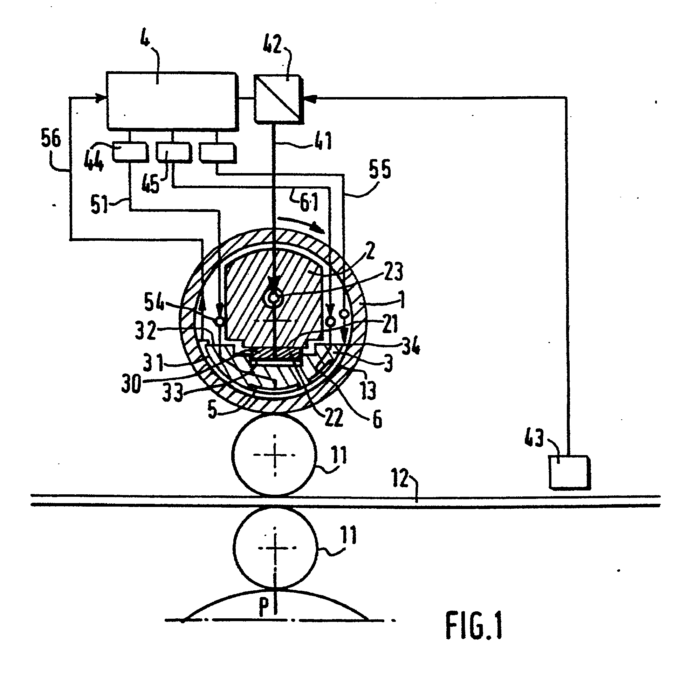

Sur la figure 1, on a représenté schématiquement, en coupe transversale, un cylindre d'appui de laminoir 1 associé à deux cylindres de travail 11 entre lesquels passe le produit laminé 12.

Selon une disposition bien connue maintenant, le cylindre d'appui est constitué d'une enveloppe tubulaire 1 qui est montée rotative, autour d'une poutre-support 2 s'étendant à l'intérieur de l'enveloppe tubulaire 1, transversalement à la direction de laminage, et définissant un axe de rotation de l'enveloppe tubulaire placé dans le plan de laminage P passant par les axes des cylindres de travail 11 .

L'enveloppe tubulaire 1 prend appui sur la poutre 2 par l'intermédiaire d'une pluralité de patins de maintien 3 répartis sur toute sa longueur et interposés entre la face interne cylindrique 13 de l'enveloppe et la face inférieure 21 de la poutre-support 2.

A cet effet, chaque patin de maintien 3 prend appui, d'un côté sur l'enveloppe tubulaire par l'intermédiaire d'une face d'appui cylindrique 31 de diamètre légèrement inférieur à celui de la face interne 13 de l'enveloppe et, de l'autre, sur la poutre 2, par l'intermédiaire d'un vérin hydraulique (30) centré dans le plan d'appui P et comprenant une chambre (33) ménagée dans le corps du patin 3 et à l'intérieur de laquelle peut coulisser un piston 22 solidaire de la poutre 2 ou prenant simplement appui sur celle-ci comme on le verra plus loin. La chambre 33 du vérin 30 est alimentée en huile à partir d'une centrale hydraulique 4 par un circuit d'alimentation 41 qui, par exemple, passe dans un orifice central 23 de la poutre 2 et traverse celle-ci et le piston 22 pour déboucher dans la chambre 33. Chaque patin 3 peut ainsi être associé à un circuit particulier 41 dont le débit et la pression sont contrôlés par un dispositif de régulation 42 en fonction d'informations transmises par un dispositif 43 de contrôle de la planéité du produit laminé 12 et qui peut être de tout type connu.

De nombreuses installations de ce genre ont déjà été réalisées et décrites dans des documents publiés et il n'est donc pas nécessaire de la décrire en détail.

On sait en particulier que, selon les indications données par le dispositif de contrôle 43, le dispositif de régulation 42 règle la pression dans les vérins 33 de chacun des patins de maintien 3 de façon à donner à l'enveloppe tubulaire 1 un profil extérieur convenable susceptible , en particulier, de compenser le fléchissement de la poutre 2 sous l'action des efforts appliqués .

Pour transmettre la poussée du vérin 33 à l'enveloppe 1, il est nécessaire d'interposer un film de fluide lubrifiant entre la face d'appui 31 du patin 3 et la face interne 13 de l'enveloppe et différents moyens peuvent être utilisés à cet effet.

Par exemple, le patin 3 peut être muni dans sa partie centrale d'une poche hydrostatique 5 constituée d'un évidement ménagé sur la face d'appui 31 en s'ouvrant largement vers l'extérieur et relié à la centrale hydraulique 4 par un circuit d'alimentation 51 permettant d'introduire dans la poche 5 le fluide lubrifiant, sous une pression correspondant à la poussée du vérin 22, 33, avec un débit de fuite suffisant pour que l'huile se répande entre la face interne 13 de l'enveloppe 1 et la face d'appui 31 du patin 3 en formant un film d'huile continu 52 qui permet la rotation de l'enveloppe 1 en prenant appui sur le patin 3.

La pression d'alimentation des poches d'effort 5 des patins 3 peut être la même pour l'ensemble des patins, chacun de ceux-ci pouvant être muni d'un canal 53 d'alimentation de la poche d'effort 5 relié à une conduite de distribution 54 s'étendant le long de la poutre 2 pour l'alimentation de tous les patins et alimenté par le circuit 51 à partir de la centrale hydraulique 4 par l'intermédiaire d'un dispositif 44 de contrôle de la pression .

Il est possible également, comme on l'a décrit dans la demande de brevet FR-A 2 572 313 de la Demanderesse déjà citée, d'associer les patins 3 à des moyens de mise en circulation d'huile dans l'espace entre les patins et l'enveloppe, comprenant un circuit de gavage 55 qui intro duit le fluide lubrifiant à l'extrémité 34 du patin 3 tourné du côté amont dans le sens de rotation de l'enveloppe, le fluide ainsi injecté étant entraîné par la rotation de l'enveloppe 1 autour du patin 3 jusqu'à l'extrémité aval 35 où est placé un dispositif de récupération de l'huile qui, par un circuit de retour 56, renvoie l'huile récupérée dans la centrale hydraulique 4.

De la sorte, selon la demande de brevet déjà citée un effet de portance hydrodynamique peut s'ajouter à l'effet hydrostatique réalisé par la poche d'effort 5 mais on peut aussi, dans certains cas, utiliser le dispositif hydrodynamique seul.

Selon la caractéristique essentielle de l'invention, on dispose sur la partie 36 de la face d'appui 31 du patin tournée du côté amont dans le sens de rotation, une poche hydrostatique latérale 6 qui est alimentée en huile par la centrale hydraulique 4 par l'intermédiaire d'un circuit d'alimentation 61 commun à tous les patins et débouchant dans une conduite de répartition 62 reliée aux différentes poches latérales 6 par des canaux 63 ménagés dans chacun des patins.

Le circuit 61 d'alimentation des poches latérales 6 est muni d'un moyen 45 de contrôle du débit et de la pression de l'huile .

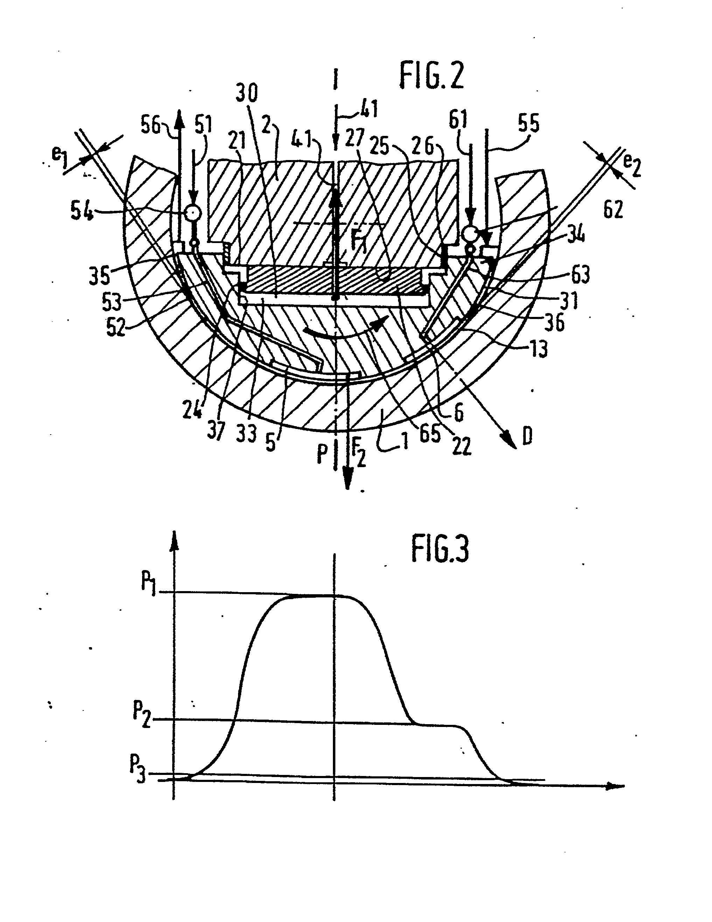

Il est ainsi possible, en alimentant les poches 6 sous une pression suffisante dirigée suivant une direction D inclinée par rapport au plan d'appui P de provoquer un léger décalage angulaire du patin 3 par rapport à la poutre 2 dans le sens de la flèche 65 indiqué sur la figure 2, c'est-à-dire du côté aval du patin. Le jeu $e_1$ entre l'extrémité aval 35 du patin et la paroi interne 13 de l'enveloppe diminue alors que le jeu $e_2$ à l'extrémité amont 34 du patin 3 augmente . On réalise ainsi à l'extrémité aval 35 du patin la formation d'un coin d'huile qui détermine un effet automatique de centrage relatif de l'enveloppe 1 par rapport au patin 3 qui s'appuie sur la poutre 2 par l'intermédiaire du vérin 30.

On peut donc définir un jeu minimum $e_0$, par exemple de 50 microns, et déterminer les pressions dans la poche d'effort 5 et dans la poche de centrage 6 en fonction du jeu minimum, de la vitesse de rotation de l'enveloppe qui est généralement fixée à l'avance, de l'élévation de température, de l'effort à transmettre sur l'enveloppe et, d'une façon générale, de tous les paramètres agissant sur la circulation d'huile pour que le jeu soit maintenu par auto-régulation à la valeur fixée. En effet, comme on l'a représenté schématiquement, à titre d'exemple, sur le diagramme de la figure 3, qui donne la répartition des pressions le long de la face d'appui 31 du patin, la pression $P_2$ dans la poche de centrage 6 peut être déterminée en correspondance avec la pression $P_1$ dans la poche d'effort 5 et en tenant compte de la position des poches de façon qu'il y ait un équilibre entre les pressions exercées de part et d'autre du plan médian P du patin. De la sorte, si le jeu $e_1$ diminue, il se produit une augmentation de pression du côté aval qui repousse le patin 3 dans sa position médiane et réciproquement .

Grâce à la poche de centrage selon l'invention, il est donc possible de réaliser le coin d'huile nécessaire à l'auto-centrage hydrodynamique du patin sans donner à la face d'appui de ce dernier le profil normalement nécessaire pour réaliser le coin d'huile, comme on le fait dans les paliers hydrodynamiques et ceci, même pour de faibles vitesses relatives entre l'enveloppe et les patins.

On notera que, comme on l'a représenté sur la figure, la poche d'effort 5 n'est pas exactement centrée sur le plan d'appui P mais est, de préférence, légèrement décalée vers l'aval de façon à ce que le centrage de chaque patin par rapport à l'enveloppe se fasse en prenant en compte les effets combinés des deux poches 5 et 6.

L'huile est introduite dans ces poches 5 et 6 avec un débit constant et par conséquent avec une pression dans la poche qui varie en fonction de la position du patin et il en résulte un débit de fuite d'huile qui se mélange avec l'huile en circulation entre le patin et l'enveloppe, l'ensemble étant récupéré par le circuit 56.

De façon avantageuse, le piston 22 s'appuie sur la paroi latérale de la chambre 33 du vérin 30 par l'intermédiaire d'un joint d'étanchéité 24 aménagé de façon à constituer un appui permettant un léger pivotement du patin 3 par rapport au piston 22 autour d'un axe parallèle à celui de l'enveloppe 1. En outre, ce dernier est de préférence constitué d'une plaque séparée qui prend appui avec possibilité de glissement sur la face inférieure 21 de la poutre 22, celle-ci constituant une simple face plane lisse perpendiculaire au plan d'appui P.

Avant la mise sous pression, les patins 3 sont maintenus en place par rapport à la poutre de support 2 par coulissement le long de faces de guidage parallèles au plan de serrage P et munies de garniture 25 laissant un certian jeu , par exemple de 1 mm, pour le positionnement relatif du pistion 22, du patin 3 et de l'enveloppe . A la mise en route du laminoir, les différents éléments peuvent donc se positionner librement les uns par rapport aux autres, le piston 22 de chaque patin pouvant légèrement glisser sur la face d'appui lisse 21 de la poutre 2 tant que la pression n'est pas imporante . En revanche, dès que la pression dans les vérins 30 augmente, le piston 22 se bloque par frottement par rapport à la poutre 2 et constitue un appui latéral fixe pour le patin 3 qui peut cependant pivoter légèrement autour de l'axe en fonction des pressions appliquées sur l'enveloppe 1 le long de la face d'appui 31.

Grâce à cette disposition, à la mise en service, l'enveloppe et l'ensemble des patins peuvent se positionner les uns par rapport aux autres en fonction des efforts ap pliqués puis, lorsque les vérins sont mis sous pression, on obtient un auto-centrage relatif de l'enveloppe et des patins, chaque patin prenant une position stable lorsque les résultantes F2 des efforts dans le film d'huile et F1 des efforts dans la chambre hydraulique 33 sont égales et opposées .

Cependant, la résultante globale des efforts mis en jeu ne passe pas obligatoirement par le centre de l'arbre qui reçoit ainsi un couple ayant tendance à le faire tourner .D'autre part, l'enveloppe a besoin d'un point d'appui dans le plan de serrage du côté opposé au patin.

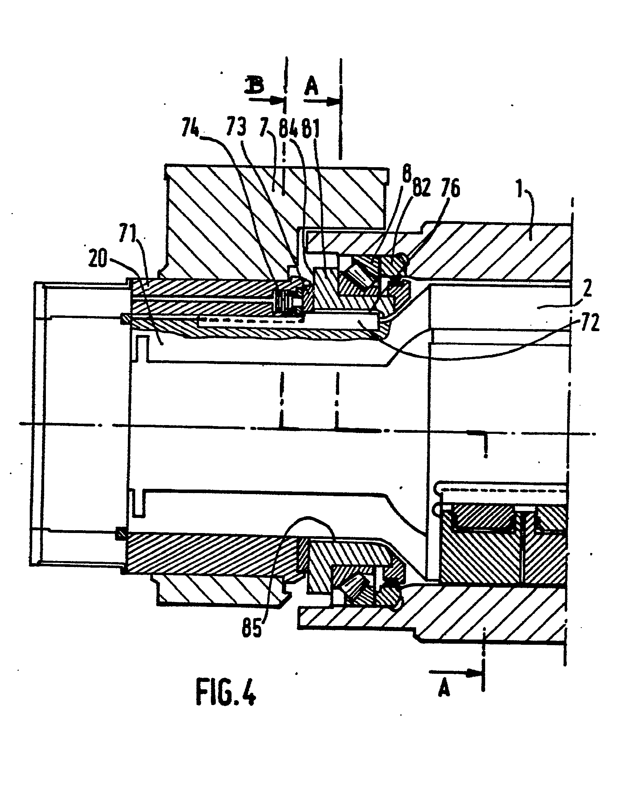

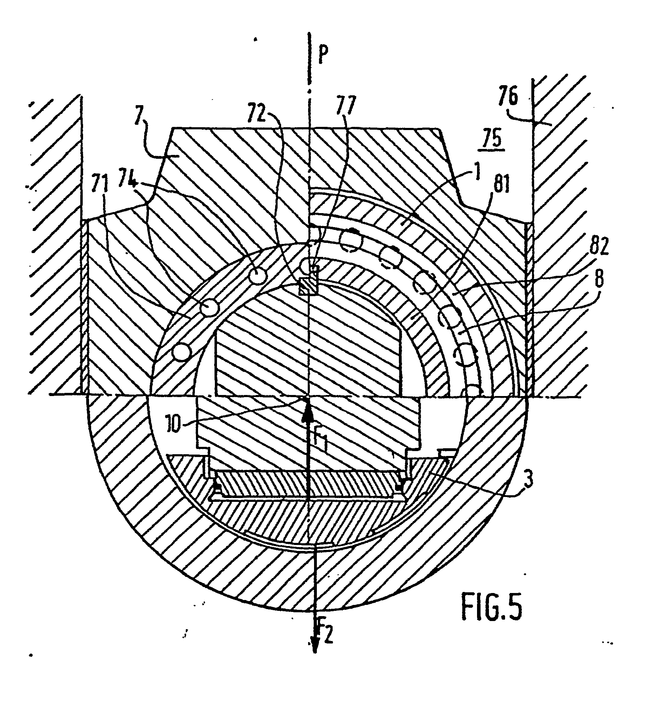

C'est pourquoi , selon une disposition particulièrement avantageuse représentée sur les figures 4 et 5, les paliers 8 de centrage de l'enveloppe sont guidés par rapport aux empoises 7 chacun par une clavette 72 servant également au blocage en rotation de la poutre support 2 .

En effet, comme on l'a représenté en détail sur la figure 4, chaque extrémité 20 de la poutre-support 2 est enfilée sans jeu dans une douille 71 fixée sur l'empoise 7 qui , de façon habituelle, est montée coulissante suivant la direction de serrage dans une fenêtre 75 de la colonne 76 correspondante du laminoir.

L'enveloppe tubulaire 1 est munie à chaque extrémité d'un palier de centrage 8 qui comprend une bague interne 81 et une bague externe 82 entre lesquelles sont placés des roulements coniques permettant au palier 8 de servir de butée pour encaisser les poussées axiales appliquées sur l'enveloppe .

Alors que la bague externe 82 est solidaire en rotation de l'enveloppe 1, la bague interne 81 entoure l'extrémité 20 de la poutre-support 2 avec un jeu suffisant pour permettre à l'enveloppe tubulaire 1 de se positionner librement par rapport à la poutre-support 2 sous l'action des efforts appliqués et pour tenir compte de l'épaisseur du produit laminé . En effet,la bague interne 81 prend appui directement sur la douille 71 de l'empoise 7 par l'intermédiaire d'un anneau de frottement 73 qui est appliqué sous pression contre la face frontale 84 de la bague interne 81 par une série de poussoirs hydrauliques 74 répartis sur tout le pourtour de la douille 71 et constitué chacun par un vérin alimenté en huile sous pression.

De la sorte, l'enveloppe 1 et la poutre 2 peuvent se déformer indépendamment l'une de l'autre autour des deux points de centrage constitués, à chaque extrémité , par la clavette unique 72. Cette dernière , qui est centrée dans le plan de serrage P et placée du côté diamétralement opposé au patin 3 , s'engage dans trois rainures alignées ménagées respectivement sur la douille 71, sur l'extrémité 20 de la poutre 2 et sur la bague interne 81 du palier 8.

La bague 81 est donc solidarisée uniquement par friction avec la douille 71 par l'intermédiaire de l'anneau de frottement 73. Lorsque la poutre-support 2 fléchit sous l'action de l'effort de serrage, les empoises 7 enfilées sans jeu sur ces extrémités 20 peuvent subir de légers décalages angulaires entre les faces de guidage des colonnes 76 , l'axe de la douille 71 , qui correspond à celui de l'extrémité 20 de la poutre 2, n'étant plus rigoureusement perpendiculaire à l'effort de serrage. Cependant, sous l'action des efforts appliqués et des dilatations thermiques ,l'enveloppe tubulaire 1 se positionne et se déforme légèrement de telle sorte que le plan de la face frontale 84 du palier 8 se décale également par rapport à la direction de l'effort de serrage mais ce décalage est indépendant de celui de l'axe de la douille 71 dû au fléchissement de la poutre 2, les deux déformations étant indépendantes l'une de l'autre en raison du jeu existant entre la face circulaire 85 de la bague 81 et la paroi de l'extrémité 20 de la poutre 2, le même jeu 77 étant laissé entre la clavette 72 et le fond de la rainure correspondante de la bague 81.

Le décalage angulaire entre l'anneau de frottement 73 qui reste appliqué contre la bague 81 et l'extrémité de la douille 71 est absorbé par l'ensemble des poussoirs 74.

De même, lors de la mise en service , la bague interne 81 peut glisser légèrement sur l'anneau de frottement 73 pour permettre le positionnement de l'enveloppe, les paliers 8 étant ensuite bloqués par friction par les poussoirs 74.

L'ensemble des dispositions qui viennent d'être décrites permet ainsi d'assurer d'une part le positionnement libre des différents éléments les uns par rapport aux autres puis, en cours de laminage, l'auto-centrage de l'enveloppe 1 par rapport aux patins de maintien par équilibre des pressions appliquées dans le film d'huile et dans la chambre du vérin de poussée en prenant une référence fixe directement sur les empoises 7 par l'intermédiaire des deux clavettes de centrage 72.

On obtient ainsi un système hydromécanique stable, chaque patin prenant librement sa position de fonctionnement par auto-régulation du film d'huile.

Bien entendu, l'invention ne se limite pas aux détails du mode de réalisation qui vient d'être décrit à titre de simple exemple, des variantes ou dispositions équivalentes pouvant être utilisées sans sortir du cadre de protection défini par les revendications.

En particulier, on a décrit un cylindre à patins de matien utilisant en combinaison des moyens d'appui hydrostatiques et hydrodynamiques mais la poche de centrage selon l'invention pourrait être utilisée également avec des patins de maintien utilisant uniquement un effet hydrodynamique.

Comme on l'a indiqué, lorsque l'appui du patin sur l'enveloppe est réalisé uniquement par effet hydrodynamique, l'utilisation de la poche de centrage selon l'invention favorise l'effet d'auto-centrage du patin même sans donner une forme particulière à la face d'appui 31 de ce dernier.

Lorsque le patin de maintien 3 est muni uniquement d'une poche d'effort hydrostatique 5, l'utilisation de la poche de centrage 6 permet de réaliser un auto-centrage par effet de coin à extrémité aval,la circulation d'huile dans l'intervalle entre le patin et l'enveloppe étant assurée alors par le débit de fuite des poches d'effort 5 et de centrage 6, même en l'absence du circuit de gavage 55.

Par ailleurs, on a décrit l'invention dans le cadre d'un cylindre d'appui de laminoir qui en constitue une application particulièrement intéressante, mais les mêmües dispositions pourraient être utiles dans d'autres applications, chaque fois que l'on utilise un cylindre à enveloppe tournante prenant appui sur une poutre-support par l'intermédiaire de patins de maintien répartis sur sa longueur .

## Revendications

1. Cylindre à enveloppe tournante comprenant un support fixe (2) en forme de poutre allongée, une enveloppe tubulaire (1) entourant la poutre-support (2) et montée rotative autour d'un axe, une pluralité de moyens (3) de maintien de l'enveloppe répartis l'un à côté de l'autre sur la longueur de la poutre suivant un plan d'appui (P) le long duquel est transmis un effort de serrage, chaque moyen de maintien comprenant:

— un patin (3) centré sensiblement dans le plan d'appui (P), int.erposé entre l'enveloppe (1) et la poutre-support (2), et monté coulissant sur cette dernière suivant une direction radiale, sensiblement dans le plan d'appui (P) le patin (3) étant muni d'une face d'appui cylindrique (31) de rayon sensiblement égal à celui de la face interne (13) de l'enveloppe (1) et séparée de celle-ci par un intervalle (52),

— un moyen de réglage (30) de la poussée radiale du patin (3), prenant appui sur ce dernier et sur la poutre (2),

— et des moyens (55, 56) de portance hydrodynamique par mise en circulation d'un fluide lubrifiant entre une extrémité amont (54) et une extrémité aval (35) dudit intervalle (52), caractérisé par le fait que chaque patin (3) est muni, sur la partie (36) de sa face d'appui (31) tournée du côté amont, dans le sens de rotation de l'enveloppe (1), d'un moyen auxiliaire (6) d'application contre la face interne (13) de l'enveloppe, d'une poussée latérale dirigée suivant une direction radiale (D) inclinée vers l'amont par rapport au plan d'appui (P), ladite poussée étant suffisante pour entraîner, en service, un léger décalage angulaire du patin susceptible de réaliser un coin d'huile à l'extrémité aval du patin permettant d'assurer un auto-centrage relatif de l'enveloppe (1) par rapport au patin (3).

2. Cylindre selon la revendication 1, caractérisé en ce que le moyen d'application d'une poussée latérale comprend, pour chaque patin (3), au moins une poche de centrage hydrostatique (6) ménagée sur le côté amont (36) de la face d'appui (31) du patin (3) et s'ouvrant vers la face interne (13) de l'enveloppe (1), ladite poche de centrage (6) étant reliée a un circuit séparé (61) d'alimentation sous presion de la poche (6) par un fluide lubrifiant susceptible de constituer au moins une partie du fluide circulant dans l'intervalle (52) entre le patin (3) et l'enveloppe (1).

3. Cylindre à enveloppe tournante selon la revendication 2, caractérisé par le fait que la poche de centrage (6) est alimentée par le circuit (61) avec un débit constant et que la pression dans la poche varie en fonction de la position du patin (3), le fluide alimenté par la poche (6) se mélangeant avec le fluide en circulation entre le patin (3) et l'enveloppe (1).

4. Cylindre à l'enveloppe tournante selon l'une des revendications 1 à 3, caractérisé par le fait que, le patin (3) étant muni, en outre, d'une poche d'effort hydrostatique (5) sensiblement centrée dans le plan d'appui (P) et alimentée en fluide sous pression, la poche d'effort (5) et la poche de centrage (6) sont reliés à des circuits séparés, respectivement (51) et (61) d'alimentation en fluide, sous des pressions différentes, la pression dans la poche de centrage (6) étant réglée en correspondance avec la pression dans la poche d'effort (5) de façon qu'il y ait un équilibre entre les pressions exercées de part et d'autre du plan médian du patin (3).

5. Cylindre à l'enveloppe tournante selon l'une des revendications 1 à 4, caractérisé par le fait que chaque vérin (30) de réglage de la poussée du patin comprend une chambre (33) ménagée dans le corps du patin (3) et fermée par un piston (22) constitué d'une plaque prenant appui avec possibilité de glissement sur la face plane (21) de la poutre-support (2) et munie, sur sa périphérie, d'un joint d'étanchéité (24) coulissant le long de la paroi latérale (37) limitant la chambre (33) avec une possibilité de rotulage permettant un léger décalage angulaire du patin (3) par rapport au piston (22).

6. Cylindre à enveloppe tournante selon la revendication 4, caractérisé par le fait que chaque patin (3) est monté coulissant radialement sur la poutre-support (2) avec un jeu permettant un léger décalage angulaire du patin (3).

7. Cylindre à enveloppe tournante selon l'une des revendications précédentes, utilisable pour la transmission de l'effort de serrage dans un laminoir et dans lequel la poutre-support (2) est portée par deux empoises (7) logées respectivement dans deux montants (76) de la cage du laminoir, l'enveloppe (1) étant munie, à chaque extrémité, d'un palier de centrage (8) comprenant une bague externe (82) solidaire en rotation de l'enveloppe et une bague interne (81) fixée en rotation, caractérisé par le fait que la bague interne (81) de chaque palier de centrage (8) prend appui axialement sur l'empoise de support correspondante (7) et est bloquée en rotation par rapport à celle-ci par une clavette (72) centrée dans le plan de serrage (P) et placée du côté diamétralement opposé aux patins de réglage (3) et que l'enveloppe est centrée dans le plan de serrage, d'un côté par lesdites clavettes (72) et de l'autre par l'ensemble des patins de réglage (3).

8. Cylindre à enveloppe tournante selon la revendication 7, caractérisé par le fait que chaque extrémité (20) de la poutre-support (2) est enfilée sans jeu dans une douille (71) fixée à l'intérieur de l'empoise de support (7) correspondante et sur laquelle l'extrémité (20) de la poutre-support est bloquée en rotation.

9. Cylindre à enveloppe tournante selon la revendication 7, caractérisé par le fait que la bague interne (81) de chaque palier (8) de centrage de l'enveloppe est fixée par simple friction sur la douille (71) de l'empoise correspondante par l'intermédiaire d'un anneau de frottement (73) appliqué sur la face frontale (82) de la bague interne (81) au moyen d'une série de poussoirs hydrauliques (74) répartis sur le pourtour de la douille (71).

10. Cylindre à enveloppe tournante selon la revendication 7, caractérisé par le fait que la bague interne (81) de chaque palier de centrage (8) et l'extrémité correspondante (20) de la poutre-support (2) sont bloquées en rotation par une clavette unique (72) s'engageant dans des rainures alignées le long du plan de serrage (P) et ménagées respectivement dans la douille (71), la bague interne (81) et la poutre-support (2).

11. Cylindre à enveloppe tournante selon la revendication 10, caractérisé par le fait que le fond de la rainure (83) de la bague interne (81) dans laquelle s'engage la clavette (72) est écarté de cette dernière par un jeu suffisant pour permettre le positionnement de l'enveloppe tubulaire (1) par rapport aux empoises (8) à la mise en service avec glissement de la bague interne (81) sur l'anneau de frottement (74).

**Patentansprüche**

1. Walze mit drehbarem Walzenmantel bestehend aus einer feststehenden als länglicher Träger ausgebildeten Abstützung (2), einem röhrförmigen den Stützträger (2) umgebenden, um eine Achse drehbar montierten Mantel (1), mehreren über die Trägerlänge gemäss einer Stützebene (P) nebeneinander angeordneten Mantel-Haltemittel (3), entlang derer eine Anstellkraft übertragen wird, wobei jedes Haltemittel umfasst:
— eine im wesentlichen in der Stützebene (P) zentrierte, zwischen dem Mantel (1) und dem Stützträger (2) dazwischengeschaltete, auf dem letzteren im wesentlichen in der Stützebene (P) gemäss einer radialen Richtung gleitend montierte Gleitkufe (3), wobei die Gleitkufe (3) eine zylindrische Auflagefläche (31) mit einem im wesentlichen dem Radius der Innenfläche (13) des Mantels (1) entsprechenden Radius aufweist, die durch einen Zwischenraum (52) voneinander getrennt sind,
— ein auf der Kufe (3) und auf dem Träger (2) sich abstützendes Einstellmittel (30) für den Radialschub der Kufe (3),
— und hydrodynamische Tragfähigkeltsmittel (55, 56) durch Inumlaufsetzung eines Schmiermediums zwischen einer Eintrittsseite (34) und einer Austrittsseite (35) dieses Zwischenraumes (52), dadurch gekennzeichnet, dass jede Kufe (3) an dem Teil (36) seiner zur Eintrittsseite hin gerichteten Auflagefläche (31) in der Drehrichtung des Mantels (1) ein Hilfsmittel (6) zum Aufdrücken gegen die Mantel-Innenfläche (13) einer seitlichen Schubkraft aufweist, die gemäss einer radialen, gegenüber der Stützebene (P) zur Eintrittsseite geneigten Richtung (D) ausgerichtet ist, wobei diese Schubkraft ausreicht um eine kleine Winkelversetzung der Kufe im Betrieb zu bewirken, die geeignet ist einen Oelkeil am Austrittsende der Kufe zu bilden, um eine relative Selbstzentrierung des Mantels (1) gegenüber der Kufe (3) zu gewährleisten.

2. Walze nach Anspruch 1, dadurch gekennzeichnet, dass bei jeder Kufe (3) das Mittel zum Aufdrücken einer seitlichen Schubkraft mindestens eine hydrostatische Zentriertasche (6) aufweist, die an der Eintrittsseite (36) der Auflagefläche (31) der Kufe (3) angeordnet und zur Innenfläche (13) des Mantels (1) geöffnet ist, wobei diese Zentriertasche (6) an einen getrennten Druckkreis (61) zur Versorgung der Tasche (6) mit einem Schmiermedium angeschlossen ist, das mindstlens ein Teil der in dem Zwischenraum (52) zwischen der Kufe (3) und dem Mantel (1) umlaufenden Flüssigkeit bildet.

3. Walze mit drehbarem Walzenmantel nach Anspruch 2, dadurch gekennzeichnet, dass die Zentriertasche (6) mit einer konstanten Durchsatzmenge über den Kreis (61) versorgt wird, und dass der Druck in der Tasche entsprechend der Lage der Kufe (3) schwankt, wobei das über die Tasche (6) eingespeiste Medium sich mit der zwischen der Kufe (3) und dem Mantel (1) umlaufenden Flüssigkeit vermischt.

4. Walze mit drehbarem Walzenmantel nach einem der Ansprüche 1 bis 3, dadurch gekennzeichnet, dass, wobei die Kufe (3) zusätzlich eine im wesentlichen in der Stützebene (P) zentrierte, mit Druckmedium gespeiste hydrostatische Krafttasche (5) aufweist, die Krafttasche (5) und die Zentriertasche (6) an jeweils getrennte (51) und (61) Versorgungskreise mit unterschiedlichen Flüssigkeitsdrücken angeschlossen sind, wobei der Druck in der Zentriertasche (6) in Abstimmung mit dem Druck in der Krafttasche (5) so eingestellt wird, dass zwischen den beiderseits der Mittelebene der Kufe (3) ausgeübten Drücke ein Ausgleich erfolgt.

5. Walze mit drehbarem Walzenmantel nach einem der Ansprüche 1 bis 4, dadurch gekennzeichnet, dass jeder Einstellzylinder (30) der Schubkraft der Kufe eine Kammer (33) aufweist die in dem Körper der Kufe (3) angeordnet und durch einen aus einer Platte bestehenden Kolben (22) verschlossen ist, der sich auf der ebenen Fläche (21) des Stützträgers (2) gleitbar abstützt und an seiner Peripherie einen Dichtungsring (24) aufweist, der entlang der die Kammer (33) bregrenzenden Seitenwand (37) gleitet, wobei die Möglichkeit einer Gelenkbewegung besteht um eine kleine Winkelversetzung der Kufe (3) gegenüber dem Kolben (22) zu ermöglichen.

6. Zylinder mit drehbarem Walzenmantel nach Anspruch 4, dadurch gekennzeichnet, dass jede Kufe (3) auf dem Stützträger (2) mit einem Spiel in radialer Richtung gleitend montiert ist, wodurch eine kleine Winkelversetzung der Kufe (3) möglich ist.

7. Zylinder mit drehbarem Walzenmantel nach einem der vorhergehenden Ansprüche, einsetzbar zur Uebertragung der Anstellkraft in einem Walzwerk und in welchem der Stützträger (2) durch zwei jeweils in zwei Walzgerüst-Ständer (76) untergebrachten Einbaustücke (7) abgestützt ist, wobei der Walzenmantel (1) an jedem Ende ein Zentrierlager (8) aufweist, bestehend aus einem mit dem Walzenmantel drehbar verbundenen Aussenring (82) und aus einem feststehenden Innenring (81), dadurch gekennzeichnet, dass der Innenring (81) von jedem Zentrierlager (8) sich axial auf dem entsprechenden Einbaustück (7) abstützt und zu diesen durch einen in der Anstellebene (P) zentrierten und auf der zu den Einstellkufen (3) entgegengesetzten Seite angeordneten Keile (72) drehbeweglich festgestellt ist, und dass der Walzenmantel auf einer Seite über diese Keile (72) und auf der anderen Seite über sämtliche Einstellkufen (3) in der Anstellebene zentriert ist.

8. Walze mit drehbarem Walzenmantel nach Anspruch 7, dadurch gekennzeichnet, dass jedes Ende (20) des Stützträgers (2) in eine Hülse (71) ohne Spiel eingesteckt ist, die innen in dem entsprechenden Einbaustück (7) befestigt und auf welcher das Stützträger-Ende (20) drehbar festgestellt ist.

9. Walze mit drehbarem Walzenmantel nach Anspruch 7, dadurch gekennzeichnet, dass der Innenring (81) des jeweiligen Mantel-Zentrierlagers (8) auf der Hülse (71) des entsprechenden Einbaustückes über einen gegen die Frontseite (82) des Innenringes (81) mittels einer Reihe über den Umfang der Hülse (71) verteilten Hydraulikstössel gedrückten Reibungsring (73) einfach durch Reibschluss befestigt ist.

10. Walze mit drehbarem Walzenmantel nach Anspruch 7, dadurch gekennzeichnet, dass der Innenring (81) des jeweiligen Zentrierlagers (8) und das entsprechende Ende (20) des Stützträgers (2) über einen einzigen Keil (72) drehbar festgestellt sind, der in entlang der Anstellebene (P) ausgerichteten Nuten eingreift, die jeweils in der Hülse (71), dem Innenring (81) und dem Stützträger (2) angeordnet sind.

11. Walze mit drehbarem Walzenmantel nach Anspruch 10, dadurch gekennzeichnet, dass der Boden der Nut (83) des Innenringes (81), in die der Keil (72) zum Eingriff kommt, von diesem durch einen ausreichenden Abstand getrennt ist, damit der Rohrmantel (1) gegenüber den Einbaustücken (8) bei der Inbetriebnahme durch Gleiten des Innenringes (81) auf dem Reibungsring (74) positioniert werden kann.

**Claims**

1. Roll with rotating shell comprising a fixed support (2) in the form of an elongated beam, a tubular shell (1) surrounding the support beam (2) and rotatably mounted about an axis, a plurality of means (3) for holding the shell, these means being distributed side by side along the length of the beam and in a bearing plane (P) along which a compacting load is transmitted, each holding means comprising:
   - a shoe (3), essentially centred in the bearing plane (P), disposed between the shell (1) and the support beam (2) and slideably mounted on the said support beam in a radial direction, essentially in the bearing plane (P), the shoe (3) being provided with a cylindrical bearing face (31) having a radius essentially equal to that of the internal face (13) of the shell (1) and separated from the latter by a gap (52),
– a means (30) for regulating the radial thrust of the shoe (3), which means bears on the shoe and on the beam (2), and
– means (55, 56) of hydrodynamic lift by circulating a lubricating fluid between an upstream end (54) and a downstream end (35) of the said gap (52), characterized in that each shoe (3) is provided, on the part (36) of its bearing face (31) which is turned upstream with respect to the direction of rotation of the shell (1), with an auxiliary means (6) of application against the internal face (13) of the shell with a lateral thrust directed in a radial direction (D) inclined towards the side upstream with respect to the bearing plane (P), the said thrust being sufficient to cause, during service, a slight angular shift in the shoe which is capable of providing an oil wedge at the downstream end of the shoe which ensures relative automatic centring of the shell (1) with respect to the shoe (3).

2. Roll according to Claim 1, characterized in that the means of application of a lateral thrust comprises for each shoe (3) at least one hydrostatic centring cavity (6), recessed in the side upstream (36) of the bearing face (31) of the shoe (3) and opening towards the internal face (13) of the shell (1), the said centring cavity (6) being connected to a separate circuit (61) supplying the cavity (6) with a pressurized lubricating fluid capable of constituting at least part of the fluid circulating in the gap (52) between the shoe (3) and the shell (1).

3. Roll with rotating shell according to Claim 2, characterized in that the centring cavity (6) is fed by the circuit (61) at a constant rate and in that the pressure in the cavity varies as a function of the position of the shoe (3), the fluid fed by the cavity (6) mixing with the fluid in circulation between the shoe (3) and the shell (1).

4. Roll with rotating shell according to one of Claims 1 to 3, characterized in that, the shoe (3) being provided moreover with a hydrostatic load cavity (5) essentially centred in the bearing plane (P) and fed with fluid under pressure, the load cavity (5) and the centring cavity (6) are connected to separate fluid-feed circuits, (51) and (61) respectively, under different pressures, the pressure in the centring cavity (6) being adjusted to correspond with the pressure in the load cavity (5), such that there is an equilibrium between the pressures exerted on each side of the centre plane of the shoe (3).

5. Roll with rotating shell according to one of Claims 1 to 4, characterized in that each jack (30) for regulating the thrust of the shoe comprises a chamber (33) made in the body of the shoe (3) and closed by a piston (22) consisting of a plate bearing slideably on the flat face (21) of the support beam (2) and provided on its periphery with a sealing joint (24) sliding along the lateral wall (37) delimiting the chamber (33) with a swivelling possibility enabling a slight angular shift in the shoe (3) with respect to the piston (22) to take place.

6. Roll with rotating shell according to Claim 4, characterized in that each shoe (3) is mounted slideably radially on the support beam (2) with a play enabling a slight angular shift in the shoe (3) to take place.

7. Roll with rotating shell according to one of the preceding claims, which can be used to transmit the compacting load in a rolling mill and in which the support beam (2) is carried by two chocks (7) mounted respectively in two uprights (76) of the roll stand, the shell (1) being provided at each end with a centring bearing (8) comprising an external ring (82) integral in rotation with the shell and an internal ring (81) fixed in rotation, characterized in that the internal ring (81) of each centring bearing (8) bears axially on the corresponding support chock (7) and is locked in rotation with respect to the latter by a key (72) centred in the plane (P) of compacting and placed on the side diametrically opposite to the regulating shoes (3) and in that the shell is centred in the plane of compacting, on the one hand by the said keys (72) and on the other hand by the set of regulating shoes (3).

8. Roll with rotating shell according to Claim 7, characterized in that each end (20) of the support beam (2) is inserted without play into a bushing (71) fixed inside the corresponding support chock (7), and onto which the end (20) of the support beam is locked in rotation.

9. Roll with rotating shell according to Claim 7, characterized in that the internal ring (81) of each bearing (8) centring the shell is fixed simply by friction to the bushing (71) of the corresponding chock via a friction ring (73) applied to the front face (82) of the internal ring (81) by means of a series of hydraulic thrusters (74) distributed over the periphery of the bushing (71).

10. Roll with rotating shell according to Claim 7, characterized in that the internal ring (81) of each centring bearing (8) and the corresponding end (20) of the support beam (2) are locked in rotation by a single key (72) engaging in grooves which are in a straight line along the plane (P) of compacting, and which are made respectively in the bushing (71), the internal ring (81) and the support beam (2).

11. Roll with rotating shell according to Claim 10, characterized in that the base of the groove (83) of the internal ring (81) in which the key (72) engages is separated from the latter by a play which is sufficient to allow the tubular shell (1) to be positioned with respect to the chocks (8) at the putting in operation, the interna ring (81) sliding on the friction ring (74).

FIG.1

FIG.2

FIG.3

FIG.4

FIG.5